(19) Europäisches Patentamt
European Patent Office
Office européen des brevets

(11) EP 2 012 592 B1

(12) **EUROPEAN PATENT SPECIFICATION**

(45) Date of publication and mention of the grant of the patent:
**31.03.2010 Bulletin 2010/13**

(21) Application number: **07723983.8**

(22) Date of filing: **04.04.2007**

(51) Int Cl.:
***A01P 3/00*** *(2006.01)*
***A01N 43/56*** *(2006.01)*
***A01N 43/40*** *(2006.01)*
***A01N 43/653*** *(2006.01)*
***A01N 43/50*** *(2006.01)*
***A01N 37/34*** *(2006.01)*

(86) International application number:
**PCT/EP2007/003042**

(87) International publication number:
**WO 2007/115765 (18.10.2007 Gazette 2007/42)**

(54) **FUNGICIDAL COMPOSITIONS**
FUNGIZIDE ZUSAMMENSETZUNGEN
COMPOSITIONS FONGICIDES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.04.2006 EP 06007255**

(43) Date of publication of application:
**14.01.2009 Bulletin 2009/03**

(73) Proprietor: **Syngenta Participations AG**
**4058 Basel (CH)**

(72) Inventors:
- **HAAS, Ulrich, Johannes**
**4332 Stein (CH)**
- **MILLS, Colin, Edward**
**4058 Basel (CH)**
- **NEUMANN, Christoph**
**4058 Basel (CH)**

(74) Representative: **Gaal, Jozsef Christopher et al**
**Syngenta Limited**
**Intellectual Property Department**
**PO Box No 3538**
**Jealott's Hill International, Research Centre**
**Bracknell**
**Berkshire RG42 6YA (GB)**

(56) References cited:
**WO-A-2004/035589**
**WO-A-2005/034628**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 012 592 B1

## Description

The present invention relates to novel fungicidal compositions suitable for control of diseases caused by phytopathogens, especially phytopathogenic fungi and to a method of controlling diseases on useful plants.

It is known from WO 04/35589 that certain carboxamides have biological activity against phytopathogenic fungi. On the other hand various fungicidal compounds of different chemical classes and some mixtures thereof are widely known as plant fungicides for application in various crops of cultivated plants. However, crop tolerance and activity against phytopathogenic fungi do not always satisfy the needs of agricultural practice in many incidents and aspects.

Out of the above-mentioned needs of agricultural practice for increased crop tolerance and/or increased activity against phytopathogenic fungi, there is therefore proposed in accordance with the present invention a novel composition suitable for control of diseases caused by phytopathogens comprising, in an amount producing a synergistic effect,

(A) a compound of formula I

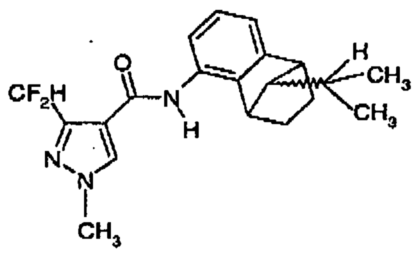

(I),

or a tautomer of such a compound;

(B) a compound selected from the group consisting of chlorothalonil (142), glyphosate (419), a compound of formula C-1

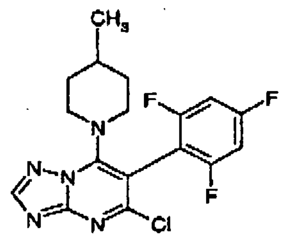

(C-1),

epoxiconazole (298), prothioconazole (685), cyproconazole (207), propiconazole (675), penconazole (619), tebuconazole (761), metconazole (525), ipconazole (468), difenoconazole (247), cyprodinil (208), azoxystrobin (47) and a pyridylethylbenzamide derivative of formula C-4

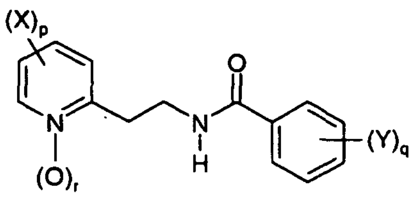

(C-4),

wherein

p is an integer equal to 1, 2, 3 or 4;
q is an integer equal to 1, 2, 3, 4 or 5;
r is an integer equal to 0 or 1;
each substituent X is chosen, independently of the others, as being halogen, alkyl, haloalkoxy or haloalkyl;
each substituent Y is chosen, independently of the others, as being halogen, alkyl, alkenyl, alkynyl, haloalkyl,

alkoxy, amino, phenoxy, alkylthio, dialkylamino, acyl, cyano, ester, hydroxy, aminoalkyl, benzyl, haloalkoxy, halosulphonyl, halothioalkyl, alkoxyalkenyl, alkylsulphonamide, nitro, alkylsulphonyl, phenylsulphonyl or benzylsulphonyl; and

(C) a compound selected from the group consisting of a triazolopyrimidine fungicide, an azole fungicide, an anilinopyrimidine fungicide, a strobilurin fungicide, a morpholine fungicide, a benzamide fungicide, glyphosate (419), trinexapac-ethyl (841) and acibenzoiar-S-methyl (6);

wherein (B) and (C) are different compounds.

It has been found that the use of component (B) and component (C) in combination with component (A) surprisingly and substantially enhance the effectiveness of the latter against fungi, and vice versa. Additionally, the method of the invention is effective against a wider spectrum of such fungi that can be combated with the active ingredients of this method, when used solely.

A further aspect of the present invention is a method of controlling diseases on useful plants or on propagation material thereof caused by phytopathogens, which comprises applying to the useful plants, the locus thereof or propagation material thereof a composition according to the invention. Prefered is a method of controlling diseases on useful plants or on propagation material thereof caused by phytopathogens, which comprises applying to the useful plants or to the locus thereof a composition according to the invention. Further prefered is a method of controlling diseases on useful plants or on propagation material thereof caused by phytopathogens, which comprises applying to the propagation material of the useful plants a composition according to the invention.

For the purposes of the present invention, halogen appearing in the substituent definitions means typically chlorine, bromine, iodine of fluorine.

For the purposes of the present invention, each of the alkyl or acyl radicals appearing in the substituent definitions typically contains from 1 to 10 carbon atoms, preferentially from 1 to 7 carbon atoms, more preferentially from 1 to 5 carbon atoms, and may be linear or branched. The alkyl radicals appearing in the substituent definitions are, for example, methyl, ethyl, n-propyl, isopropyl, n-butyl, sec-butyl, isobutyl, tert-butyl, pentyl, hexyl and the branched isomers of pentyl and hexyl.

For the purposes of the present invention, each of the alkenyl or alkynyl radicals appearing in the substituent definitions typically contains from 2 to 10 carbon atoms, preferentially from 2 to 7 carbon atoms, more preferentially from 2 to 5 carbon atoms, and may be linear or branched.

The compound of formula 1,3-difluoromethyl-1-methyl-1H-pyrazole-4-carboxylic acid (9-isopropyl-1,2,3,4-tetrahydro-1,4-methano-naphthalen-5-yl)-amide, occurs in four different stereoisomers, which are described as the single enantiomers of formulae $I_I$,$I_{II}$, $I_{III}$ and $I_{IV}$:

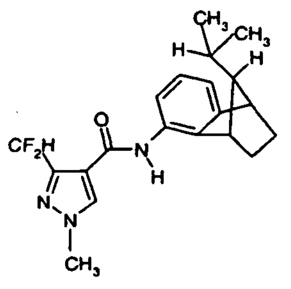

$I_I$

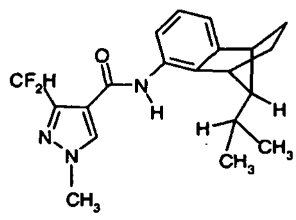

$I_{II}$

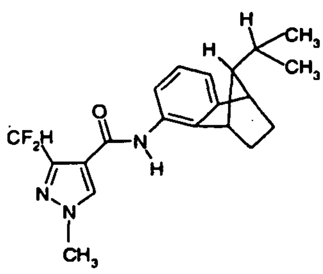

$I_{III}$

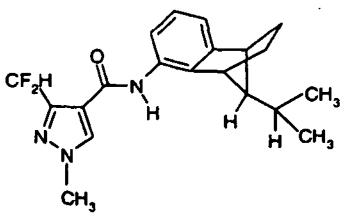

$I_{IV}$ .

The invention covers all such stereoisomers and mixtures thereof in any ratio.

According to the invention "racemic syn-3-difluoromethyl-1-methyl-1H-pyrazole-4-carboxylic acid (9-isopropyl-1,2,3,4-tetrahydro-1,4-methano-naphthalen-5-yl)-amide" or "racemic syn-compound of formula (I)" means a racemic mixture of compounds of formula I,and $I_{II}$. According to the invention "racemic anti-3-difluoromethyl-1-methyl-1H-pyrazole-4-carboxylic acid (9-isopropyl-1,2,3,4-tetrahydro-1,4-methano-naphthalen-5-yl)-amide" or "racemic anti-compound of formula (I)" means a racemic mixture of compounds of formula $I_{III}$ and $I_{IV}$.

A preferred embodiment of the present invention is represented by those compositions which comprise as component A) the racemic syn-compound of formula (I). A further preferred embodiment of the present invention is represented by those compositions which comprise as component A) the racemic anti-compound of formula (I). A further preferred embodiment of the present invention is represented by those compositions which comprise as component A) mixture of the racemic syn- and anti-compound of formula (I), in a syn/anti-ratio of from 1 :1 to 100:1,for example 1:1,2:1,3:1,4:1,5:1,6:1,7:1,8:1,9:1,10:1,20:1,50:1 or 100 : 1. Further preference is given to ratios from 2:1 to 100:1, even more preferably 4:1 to 10:1.

The compound of formula I and its manufacturing processes is described in WO 04/35589. The compound of formula I can be prepared by reacting an acid chloride of formula III

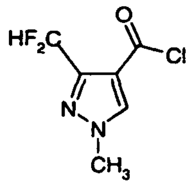 (III)

with an amine of formula IV

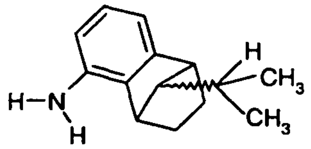 (IV).

The acid chloride of formula III can be produced by using difluoroacetic acid ethyl ester as starting material, which can be be reacted to 4,4-difluoro-3-oxo-butyric acid ethyl ester as described in example H1:

Example H1: 4,4-Difluoro-3-oxo-butyric acid ethyl ester:

A solution of 12.4 g difluoroacetic acid ethyl ester (0.1 mol) and 88.1 g of acetic acid ethyl ester (10 equivalents) was heated at 70°C. Sodium ethylate solution (20% in ethanol, 1.1 equivalents) was added within 1 hour and the mixture was stirred for 4 hours at 70°C. The reaction mixture was acidified with a ethyl acetate/HCl-solution and precipitates were removed by filteration. The solvent was removed by distillation and 17.2 g of 4,4-difluoro-3-oxo-butyric acid ethyl ester were obtained (purity: 78.2%; yield: 81.0%).
The obtained 4,4-difluoro-3-oxo-butyric acid ethyl ester can be transformed into the acid chloride of formula III according to the method as described in US-5,093.347.

The amine of formula IV can be produced according to scheme 1.

Scheme 1: Synthesis of IV using 6-nitroanthranilic acid

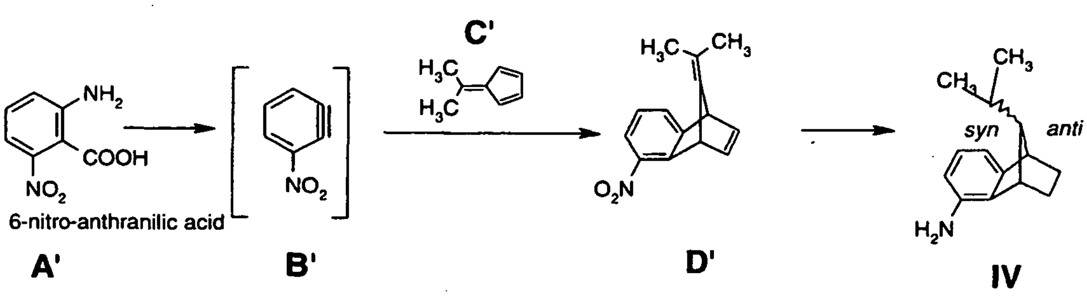

The 9-isopropylidene-5-nitro-benzonorbornadiene of formula **D**' can be synthesized through *Diels-Alder* addition of an *in situ* generated benzyne **B'** [for example starting from a 6-nitroanthranilic acid of formula (**A'**) by diazotation with *t*-butyl nitrite as described in example H2].

The 6,6-dimethylfulvene of formula **C**' is available according to M. Neuenschwander et al, Helv. Chim.Acta, 54, 1037 (1971), ibid 48, 955 (1965). R.D. Little et al, J. Org. Chem. 49, 1849 (1984), I. Erden et al, J. Org. Chem. 60, 813 (1995) and S. Collins et al, J. Org. Chem. 55, 3395 (1990).

The aniline of formula IV may be obtained by a one-pot reaction from the compound of formula **D'** via exhaustive hydrogenation as described in examples H3 and H4.

Example H2: 9-Isopropylidene-5-nitro-benzonorbornadiene:

A mixture of 6-nitroanthranilic acid (110.4 g, 0.6 mol) and 6,6-dimethylfulvene (98.5g, 1.5 eq.) in 700 ml dimethoxyethane was added dropwise to a solution of t-butyl nitrite (96.3g, 1.4 eq.) in 2 litre 1,2-dimethoxyethane under $N_2$-atmosphere at 72°C within 20 minutes. A vigorous formation of gas started immediately and the temperature rose to 79°C. Gas formation ceased after 30 min. After 3h at reflux temperature the mixture was cooled to room temperature, evaporated and purified on silica gel in hexane-ethyl acetate 95:5 resulting in 76.7 g of 9-isopropylidene-5-nitro-benzonorbornadiene as a yellow solid (m.p. 94-95 °C).

Example H3: 9-Isopropyl-5-amino-benzonorbornene: syn-enrichment

35.9 g 9-isopropylidene-5-nitro-benzonorbornadiene in 400 ml tetrahydrofurane were exhaustively hydrogenated in the presence of 25 g 5 % Rh/C over 106 h. Filtration and evaporation of the solvent resulted in 32.15 g 9-isopropyl-5-amino-benzonorbornene in the form of an oil (syn/anti-ratio 9:1; yield: 97.4% of theory).

Example H4: 9-Isopropyl-5-amino-benzonorbornene: anti-enrichment

41.41 g 9-isopropylidene-5-nitro-benzonorbornadiene in 1 litre tetrahydrofurane were exhaustively hydrogenated for four hours in the presence of 22 g 5% Pd/C at room temperature and atmospheric pressure. Filtration and evaporatation follwed by purification on silica gel in hexane-ethyl acetate-7:1 gave 29.91 g 9-isopropyl-5-amino-benzonorbornene (syn/anti-ratio 3 : 7; yield: 81.5%) in the form of an oil.

The components (B) and the components (C) are known. Where the components (B) and the components (C) are included in "The Pesticide Manual" [The Pesticide Manual - A World Compendium; Thirteenth Edition; Editor: C. D. S. Tomlin; The British Crop Protection Council], they are described therein under the entry number given in round brackets hereinabove for the particular component (B) or component (C); for example, the compound "chlorothalonil" is described under entry number (142).

Most of the components (B) and components (C) are referred to hereinabove by a so-called "common name".

The following components (C) are registered under a CAS-Reg. No.: compound C-1 (CAS 214706-53-3); orysastrobin (CAS 248593-16-0); aldimorph (CAS 91315-15-0); compound C-2.1 (CAS 238410-11-2) and compound C-2.2 (CAS 366815-39-6).

The compound of formula C-2.1 is described in EP-0-936-213 and is also known as enestrobin. The compound of formula C-3 is described in EP-0-860-438. The compound formula C-1 is described in WO 98/46607. The compounds of formula C-4 and their manufacturing processes starting from known and commercially available compounds are described in WO 04/16088. Preferred compounds of formula C-4 are:

a compound of formula C-4.1

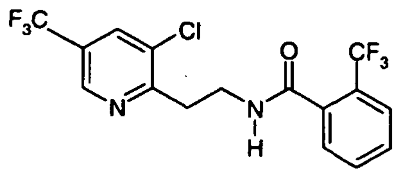

(C-4.1);

a compound of formula C-4.2

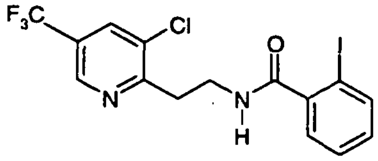

(C-4.2);

a compound of formula C-4.3

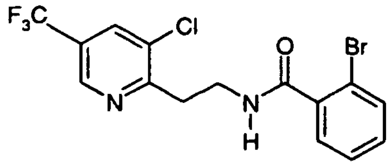

(C-4.3);

or

a compound of formula C-4.4

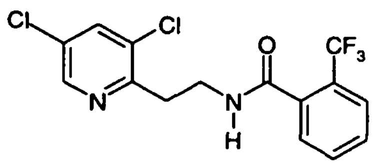

(C-4.4).

The compounds of formula C-4.1, C-4.2 and C-4.3 are also described in WO 04/16088. The compound of formula C-4.1 is registered under CAS-Reg. No.: 658066-35-4 and is also known as fluopyram. The compound of formula C-4.4 is described in WO 05/77179.

In one embodiment of the invention, component (B) is selected from chlorothalonil, a compound of formula C-1, epoxiconazole, prothioconazole, cyproconazole, penconazole, propiconazole, tebuconazole, metconazole, ipconazole, difenoconazole, cyprodinil, azoxystrobin and a pyridylethylbenzamide derivative of formula C-4; and component (C) is selected from the group consisting of a triazolopyrimidine fungicide, an azole fungicide, an anilino-pyrimidine fungicide, a strobilurin fungicide, a morpholine fungicide and a benzamide fungicide.

In another embodiment of the invention, component (B) is selected from chlorothalonil, a compound of formula C-1, epoxiconazole, prothioconazole, cyproconazole, propiconazole, tebuconazole, metconazole, ipconazole, difenoconazole, cyprodinil, azoxystrobin and a pyridylethylbenzamide derivative of formula C-4; and component (C) is selected from the group consisting of a triazolopyrimidine fungicide, an azole fungicide, an anilino-pyrimidine fungicide, a strobilurin fungicide, a morpholine fungicide and a benzamide fungicide.

Examples of especially suitable compounds as component (C) are compounds selected from the following group P:

Group P: especially suitable compounds as component (C) in the compositions according to the invention:
the compound of formula C-1;
an azole fungicide selected from azaconazole (40), bromuconazole (96), cyproconazole (207), difenoconazole (247), diniconazole (267), diniconazole-M (267), epoxiconazole (298), fenbuconazole (329), fluquinconazole (385), flusilazole (393), flutriafol (397), hexaconazole (435), imazalil (449), imibenconazole (457), ipconazole (468), metconazole (525), myclobutanil (564), oxpoconazole (607), pefurazoate (618), penconazole (619), prochloraz (659), propiconazole (675), prothioconazole (685), simeconazole (731), tebuconazole (761), tetraconazole (778), triadimefon (814), triadimenol (815), triflumizole (834), triticonazole (842), diclobutrazol (1068), etaconazole (1129), furconazole (1198), furconazole-cis (1199) and quinconazole (1378);
an anilino-pyrimidine fungicide selected from cyprodinil (208), mepanipyrim (508) and pyrimethanil (705);
a strobilurin fungicide selected from azoxystrobin (47), dimoxystrobin (226), fluoxastrobin (382), kresoxim-methyl (485), metominostrobin (551), orysastrobin, picoxystrobin (647), pyraclostrobin (690); trifloxystrobin (832), a compound of formula C-2.1 and a compound of formula C-2.2;
a morpholine fungicide selected from aldimorph, dodemorph (288), fenpropimorph (344), tridemorph (830), fenpropidin (343), spiroxamine (740), piperalin (648) and a compound of formula C-3;
a pyridylethylbenzamide derivative of formula C-4

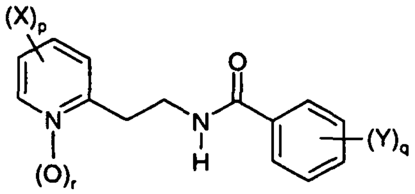

(C-4);

wherein
p is an integer equal to 1, 2, 3 or 4;
q is an integer equal to 1, 2, 3, 4 or 5;
r is an integer equal to 0 or 1;
each substituent X is chosen, independently of the others, as being halogen, alkyl, haloalkoxy or haloalkyl;
each substituent Y is chosen, independently of the others, as being halogen, alkyl, alkenyl, alkynyl, haloalkyl, alkoxy, amino, phenoxy, alkylthio, dialkylamino, acyl, cyano, ester, hydroxy, aminoalkyl, benzyl, haloalkoxy, halosulphonyl, halothioalkyl, alkoxyalkenyl, alkylsulphonamide, nitro, alkylsulphonyl, phenylsulphonyl or benzylsulphonyl;
and glyphosate (419).

The following compositions are preferred:

A composition comprising (A) a compound of the formula (I), (B) chlorothalonil and (C) a compound selected from the group P.

A composition comprising (A) a compound of the formula (I), (B) glyphosate and (C) a compound selected from the group P.

A composition comprising (A) a compound of the formula (I), (B) a compound of the formula C-1 and (C) a compound selected from the group P.

A composition comprising (A) a compound of the formula (I), (B) a compound selected from the group consisting of epoxiconazole, prothioconazole, cyproconazole, propiconazole, tebuconazole, metconazole, ipconazole and difenoconazole and (C) a compound selected from the group P.

A composition comprising (A) a compound of the formula (I), (B) epoxiconazole and (C) a compound selected from the group P.

A composition comprising (A) a compound of the formula (I), (B) penconazole and (C) a compound selected from the group P.

A composition comprising (A) a compound of the formula (I), (B) prothioconazole and (C) a compound selected from the group P.

A composition comprising (A) a compound of the formula (I), (B) cyproconazole and (C) a compound selected from the group P.

A composition comprising (A) a compound of the formula (I), (B) propiconazole and (C) a compound selected from the group P.

A composition comprising (A) a compound of the formula (I), (B) tebuconazole and (C) a compound selected from the group P.

A composition comprising (A) a compound of the formula (I), (B) metconazole and (C) a compound selected from the group P.

A composition comprising (A) a compound of the formula (I), (B) ipconazole and (C) a compound selected from the group P.

A composition comprising (A) a compound of the formula (I), (B) difenoconazole and (C) a compound selected from the group P.

A composition comprising (A) a compound of the formula (I), (B) cyprodinil and (C) a compound selected from the group P.

A composition comprising (A) a compound of the formula (I), (B) azoxystrobin and (C) a compound selected from the group P.

A composition comprising (A) a compound of the formula (I), (B) a compound of the formula C-4 and (C) a compound selected from the group P.

A composition comprising (A) a compound of the formula (I), (B) a compound of the formula C-4.1 and (C) a compound selected from the group P.

A composition comprising (A) a compound of the formula (I), (B) a compound of the formula C-4.2 and (C) a compound selected from the group P.

A composition comprising (A) a compound of the formula (I), (B) a compound of the formula C-4.3 and (C) a compound

selected from the group P.

A composition comprising (A) a compound of the formula (I), (B) a compound of the formula C-4.4 and (C) a compound selected from the group P.

An example of such a preferred composition is a composition comprising (A) the compound of the formula (I), (B) chlorothalonil and (C) the first compound selected from the group P, which is the compound of formula C-1.

Further preferred are compositions which comprise as component (B) chlorothalonil and as component (C) an azole fungicide, an anilino-pyrimidine fungicide or a morpholine fungicide. Within said embodiment, preferred component (C) is an azole fungicide or an anilino-pyrimidine fungicide.

Within said embodiment, further preferred compositions comprise as component (C) cyproconazole, propiconazole, epoxiconazole, ipconazole, prothioconazole or difenoconazole.

Within said embodiment, further preferred compositions are:

A composition comprising a compound of the formula (I), chlorothalonil and epoxiconazole.
A composition comprising a compound of the formula (I), chlorothalonil and ipconazole.
A composition comprising a compound of the formula (I), chlorothalonil and prothioconazole.
A composition comprising a compound of the formula (I), chlorothalonil and difenoconazole.
A composition comprising a compound of the formula (I), chlorothalonil and a compound of formula C-1.
A composition comprising a compound of the formula (I), chlorothalonil and cyprodinil.
A composition comprising a compound of the formula (I), chlorothalonil and azoxystrobin.

Further preferred are compositions which comprise as component (B) a compound selected from the group consisting of epoxiconazole, prothioconazole, cyproconazole, propiconazole, tebuconazole, metconazole, ipconazole and difenoconazole and as component (C) an azole fungicide, an anilino-pyrimidine fungicide or a morpholine fungicide. Within said embodiment, preferred compositions are:

A composition comprising a compound of the formula (I), propiconazole and cyproconazole. A composition comprising a compound of the formula (I), propiconazole and ipconazole.
A composition comprising a compound of the formula (I), propiconazole and a compound of formula C-1.
A composition comprising a compound of the formula (I), propiconazole and azoxystrobin.
A composition comprising a compound of the formula (I), epoxiconazole and prothioconazole.
A composition comprising a compound of the formula (I), epoxiconazole and cyprodinil.
A composition comprising a compound of the formula (I), epoxiconazole and azoxystrobin.
A composition comprising a compound of the formula (I), epoxiconazole and a compound of formula C-1.
A composition comprising a compound of the formula (I), epoxiconazole and ipconazole.
A composition comprising a compound of the formula (I), prothioconazole and cyprodinil.
A composition comprising a compound of the formula (I), prothioconazole and azoxystrobin. A composition comprising a compound of the formula (I), prothioconazole and a compound of formula C-1.

Further preferred compositions are:

A composition comprising a compound of the formula (I), a compound of formula C-1 and cyproconazole.
A composition comprising a compound of the formula (I), a compound of formula C-1 and tebuconazole.
A composition comprising a compound of the formula (I), a compound of formula C-1 and cyprodinil.
A composition comprising a compound of the formula (I), a compound of formula C-1 and azoxystrobin.
A composition comprising a compound of the formula (I), a compound of formula C-1 and ipconazole.
A composition comprising a compound of the formula (I), cyproconazole and difenoconazole.
A composition comprising a compound of the formula (I), cyproconazole and azoxystrobin.
A composition comprising a compound of the formula (I), difenoconazole and azoxystrobin.
A composition comprising a compound of the formula (I), difenoconazole and fenpropidin.
A composition comprising a compound of the formula (I), tebuconazole and azoxystrobin.
A composition comprising a compound of the formula (I), cypdrodinil and a compound of formula C-4.1.
A composition comprising a compound of the formula (I), cypdrodinil and azoxystrobin.
A composition comprising a compound of the formula (I), azoxystrobin and fenpropidin.

Further preferred are compositions which comprise as component (B) a compound selected from the group consisting of chlorothalonil, glyphosate, a compound of formula C-1, epoxiconazole, prothioconazole, cyproconazole, propiconazole, tebuconazole, metconazole, ipconazole, difenoconazole, cyprodinil, azoxystrobin and a compound of

formula C-4.1 and as component (C) trinexapac-ethyl.

Further preferred are compositions which comprise as component (B) a compound selected from the group consisting of chlorothalonil, glyphosate, a compound of formula C-1, epoxiconazole, prothioconazole, cyproconazole, propiconazole, tebuconazole, metconazole, ipconazole, difenoconazole, cyprodinil, azoxystrobin and a compound of formula C-4.1 and as component (C) acibenzolar-S-methyl. Examples of such compositions are:

A composition comprising a compound of the formula (I), chlorothalonil and acibenzolar-S-methyl.
A composition comprising a compound of the formula (I), cyprodinil and acibenzolar-S-methyl.
A composition comprising a compound of the formula (I), difenoconazole and acibenzolar-S-methyl.
A composition comprising a compound of the formula (I), azoxystrobin and acibenzolar-S-methyl.

Throughout this document the expression "composition" stands for the various mixtures or combinations of component (A), component (B) and component (C), for example in a single "ready-mix" form, in a combined spray mixture composed from separate formulations of the single active ingredient components, such as a "tank-mix", and in a combined use of the single active ingredients when applied in a sequential manner, i.e. one after the other with a reasonably short period, such as a few hours or days. The order of applying the components (A), (B) and (C) is not essential for working the present invention.

The compositions according to the invention may also comprise one or more additional pesticides. Examples for such a compositions according to the invention are:

A composition comprising a compound of formula (I), chlorothalonil, cyproconazole and propiconazole;
A composition comprising a compound of formula (I), chlorothalonil, propiconazole, tebuconazole and fenpropidin.

The compositions according to the invention are effective against harmful microorganisms, such as phytopathogenic fungi and bacteria; preferably the microorganism are phytopathogenic fungi.

The active ingredient combinations are effective especially against phytopathogenic fungi belonging to the following classes: Ascomycetes (e.g. Venturia, Podosphaera, Erysiphe, Monilinia, Mycosphaerella, Uncinula); Basidiomycetes (e.g. the genus Hemileia, Rhizoctonia, Phakopsora, Puccinia, Ustilago, Tilletia); Fungi imperfecti (also known as Deuteromycetes; e.g. Botrytis, Helminthosporium, Rhynchosporium, Fusarium, Septoria, Cercospora, Alternaria, Pyricularia and Pseudocercosporella); Oomycetes (e.g. Phytophthora, Peronospora, Pseudoperonospora, Albugo, Bremia, Pythium, Pseudosclerospora, Plasmopara).

According to the invention "useful plants" typically comprise the following species of plants: grape vines; cereals, such as wheat, barley, rye or oats; beet, such as sugar beet or fodder beet; fruits, such as pomes, stone fruits or soft fruits, for example apples, pears, plums, peaches, almonds, cherries, strawberries, raspberries or blackberries; leguminous plants, such as beans, lentils, peas or soybeans; oil plants, such as rape, mustard, poppy, olives, sunflowers, coconut, castor oil plants, cocoa beans or groundnuts; cucumber plants, such as marrows, cucumbers or melons; fibre plants, such as cotton, flax, hemp or jute; citrus fruit, such as oranges, lemons, grapefruit or mandarins; vegetables, such as spinach, lettuce, asparagus, cabbages, carrots, onions, tomatoes, potatoes, cucurbits or paprika; lauraceae, such as avocados, cinnamon or camphor; maize; tobacco; nuts; coffee; sugar cane; tea; vines; hops; durian; bananas; natural rubber plants; turf or ornamentals, such as flowers, shrubs, broad-leaved trees or evergreens, for example conifers. This list does not represent any limitation.

The term "useful plants" is to be understood as including also useful plants that have been rendered tolerant to herbicides like bromoxynil or classes of herbicides (such as, for example, HPPD inhibitors, ALS inhibitors, for example primisulfuron, prosulfuron and trifloxysulfuron, EPSPS (5-enol-pyrovyl-shikimate-3-phosphate-synthase) inhibitors, GS (glutamine synthetase) inhibitors or PPO (protoporphyrinogen-oxidase) inhibitors) as a result of conventional methods of breeding or genetic engineering. An example of a crop that·has been rendered tolerant to imidazolinones, e.g. imazamox, by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize varieties commercially available under the trade names RoundupReady®, Herculex I® and LibertyLink®.

The term "useful plants" is to be understood as including also useful plants which have been so transformed by the use of recombinant DNA techniques that they are capable of synthesising one or more selectively acting toxins, such as are known, for example, from toxin-producing bacteria, especially those of the genus Bacillus.

The term "useful plants" is to be understood as including also useful plants which have been so transformed by the use of recombinant DNA techniques that they are capable of synthesising antipathogenic substances having a selective action, such as, for example, the so-called "pathogenesis-related proteins" (PRPs, see e.g. EP-A-0 392 225). Examples of such antipathogenic substances and transgenic plants capable of synthesising such antipathogenic substances are known, for example, from EP-A-0 392 225, WO 95/33818, and EP-A-0 353 191. The methods of producing

such transgenic plants are generally known to the person skilled in the art and are described, for example, in the publications mentioned above.

The term "locus" of a useful plant as used herein is intended to embrace the place on which the useful plants are growing, where the plant propagation materials of the useful plants are sown or where the plant propagation materials of the useful plants will be placed into the soil. An example for such a locus is a field, on which crop plants are growing.

The term "plant propagation material" is understood to denote generative parts of the plant, such as seeds, which can be used for the multiplication of the latter, and vegetative material, such as cuttings or tubers, for example potatoes. There may be mentioned for example seeds (in the strict sense), roots, fruits, tubers, bulbs, rhizomes and parts of plants. Germinated plants and young plants which are to be transplanted after germination or after emergence from the soil, may also be mentioned. These young plants may be protected before transplantation by a total or partial treatment by immersion. Preferably "plant propagation material" is understood to denote seeds.

The compositions of the present invention may also be used in the field of protecting storage goods against attack of fungi. According to the present invention, the term "storage goods" is understood to denote natural substances of vegetable and/or animal origin and their processed forms, which have been taken from the natural life cycle and for which long-term protection is desired. Storage goods of vegetable origin, such as plants or parts thereof, for example stalks, leafs, tubers, seeds, fruits or grains, can be protected in the freshly harvested state or in processed form, such as pre-dried, moistened, comminuted, ground, pressed or roasted. Also falling under the definition of storage goods is timber, whether in the form of crude timber, such as construction timber, electricity pylons and barriers, or in the form of finished articles, such as furniture or objects made from wood. Storage goods of animal origin are hides, leather, furs, hairs and the like. The compositions according the present invention can prevent disadvantageous effects such as decay, discoloration or mold. Preferably "storage goods" is understood to denote natural substances of vegetable origin and/or their processed forms, more preferably fruits and their processed forms, such as pomes, stone fruits, soft fruits and citrus fruits and their processed forms. In another preferred embodiment of the invention "storage goods" is understood to denote wood.

Therefore a further aspect of the present invention is a method of protecting storage goods, which comprises applying to the storage goods a composition according to the invention.

The compositions of the present invention may also be used in the field of protecting technical material against attack of fungi. According to the present invention, the term "technical material" includes paper; carpets; constructions; cooling and heating systems; wall-boards; ventilation and air conditioning systems and the like; preferably "technical material" is understood to denote wall-boards. The compositions according the present invention can prevent disadvantageous effects such as decay, discoloration or mold.

The compositions according to the invention are particularly effective against powdery mildews; rusts; leafspot species; early blights and molds; especially against Septoria, Puccinia, Erysiphe, Pyrenophora and Tapesia in cereals; Phakopsora in soybeans; Hemileia in coffee; Phragmidium in roses; Alternaria in potatoes, tomatoes and cucurbits; Sclerotinia in turf, vegetables, sunflower and oil seed rape; black rot, red fire, powdery mildew, grey mold and dead arm disease in vine; Botrytis cinerea in fruits; Monilinia spp. in fruits and Penicillium spp. in fruits.

The compositions according to the invention are furthermore particularly effective against seedborne and soilborne diseases, such as Alternaria spp., Ascochyta spp., Botrytis cinerea, Cercospora spp., Claviceps purpurea, Cochliobolus sativus, Colletotrichum spp., Epicoccum spp., Fusarium graminearum, Fusarium moniliforme, Fusarium oxysporum, Fusarium proliferatum, Fusarium solani, Fusarium subglutinans, Gäumannomyces graminis , Helminthosporium spp., Microdochium nivale, Phoma spp., Pyrenophora graminea, Pyricularia oryzae, Rhizoctonia solani, Rhizoctonia cerealis, Sclerotinia spp., Septoria spp., Sphacelotheca reilliana, Tilletia spp., Typhula incarnata, Urocystis occulta, Ustilago spp. or Verticillium spp.; in particular against pathogens of cereals, such as wheat, barley, rye or oats; maize; rice; cotton; soybean; turf; sugarbeet; oil seed rape; potatoes; pulse crops, such as peas, lentils or chickpea; and sunflower.

The compositions according to the invention are furthermore particularly effective against post harvest diseasese such as Botrytis cinerea, Colletotrichum musae, Curvularia lunata, Fusarium semitecum, Geotrichum candidum, Monilinia fructicola, Monilinia fructigena, Monilinia laxa, Mucor piriformis, Penicilium italicum, Penicilium solitum, Penicillium digitatum or Penicillium expansum in particular against pathogens of fruits, such as pomefruits, for example apples and pears, stone fruits, for example peaches and plums, citrus, melons, papaya, kiwi, mango, berries, for example strawberries, avocados, pomegranates and bananas, and nuts.

The compositions according to the invention are particularly useful for controlling the following diseases on the following crops:

Alternaria species in fruit and vegetables; Ascochyta species in pulse crops; Botrytis cinerea in strawberries, tomatoes, sunflower, pulse crops, vegetables and grapes, such as Botrytis cinerea on grape; Cercospora arachidicola in peanuts; Cochliobolus sativus in cereals; Colletotrichum species in pulse crops; Erysiphe species in cereals; such as Erysiphe graminis on wheat and Erysiphe graminis on barley; Erysiphe cichoracearum and Sphaerotheca fuliginea in cucurbits; Fusarium species in cereals and maize; Gäumannomyces graminis in cereals

and lawns; Helminthosporium species in maize, rice and potatoes; Hemileia vastatrix on coffee; Microdochium species in wheat and rye; Mycosphaerella fijiensis in banana; Phakopsora species in soybeans, such as Phakopsora pachyrizi in soybeans; Puccinia species in cereals, broadleaf crops and perennial plants; such as Puccinia recondita on wheat, Puccinia striiformis on wheat and Puccinia recondita on barley; Pseudocercosporella species in cereals, such as Pseudocercosporella herpotrichoides in wheat; Phragmidium mucronatum in roses; Podosphaera species in fruits; Pyrenophora species in barley, such as Pyrenophora teres on barley; Pyricularia oryzae in rice; Ramularia collo-cygni in barley; Rhizoctonia species in cotton, soybean, cereals, maize, potatoes, rice and lawns, such as Rhizoctonia solani on potato, rice, turf and cotton; Rhynchosporium secalis on barley, Rhynchosporium secalis on rye; Sclerotinia species in lawns, lettuce, vegetables and oil seed rape, such as Sclerotinia sclerotiorum on oilseed rape and Sclerotinia homeocarpa on turf; Septoria species in cereals, soybean and vegetables, such as Septoria tritici on wheat, Septoria nodorum on wheat and Septoria glycines on soybean; Sphacelotheca reilliana in maize; Tilletia species in cereals; Uncinula necator, Guignardia bidwellii and Phomopsis viticola in vines; Urocystis occulta in rye; Uromyces species in beans; Ustilago species in cereals and maize; Venturia species in fruits, such as Venturia inequalis on apple; Monilinia species on fruits; Penicillium species on citrus and apples.

In general, the weight ratio of component (A) to component (B), the weight ratio of component (A) to component (C), and the weight ratio of component (B) to component (C) is from 1000 : 1 to 1 : 1000.

A non-limiting example for such weight ratios is compound of formula I : chlorothalonil : azoxystrobin is 10:1: 1. In this example the weight ratio of compound of the formula I : chlorothalonil (A:B) is 10:1, the weight ratio of compound of the formula I : azoxystrobin (A:C) is 10:1 and the weight ratio of chlorothalonil: azoxystrobin (B:C) is 1:1.

The weight ratio of component (A) to component (B), the weight ratio of component (A) to component (C), and the weight ratio of component (B) to component (C) is preferably from 100 : 1 to 1 : 100. More preferably, in said embodiment of the invention, the weight ratio of component (A) to component (B), the weight ratio of component (A) to component (C), and the weight ratio of component (B) to component (C) is from 20 : 1 to 1 : 20. Yet more preferably, in said embodiment of the invention, the weight ratio of component (A) to component (B), the weight ratio of component (A) to component (C), and the weight ratio of component (B) to component (C) is from 10 : 1 to 1 : 10.

It has been found, surprisingly, that certain weight ratios of component (A) to the combination of components (B) and (C) are able to give rise to synergistic activity.
Therefore, a further aspect of the invention are compositions, wherein component (A), component (B) and component (C) are present in the composition in amounts producing a synergistic effect. This synergistic activity is apparent from the fact that the fungicidal activity of the composition comprising component (A), component (B) and component (C) is greater than the sum of the fungicidal activities of component (A) and of the combined components (B) and (C). This synergistic activity extends the range of action of component (A), component (B) and component (C) in two ways. Firstly, the rates of application of component (A), component (B) and component (C) are lowered whilst the action remains equally good, meaning that the active ingredient mixture still achieves a high degree of phytopathogen control even where the three individual components have become totally ineffective in such a low application rate range. Secondly, there is a substantial broadening of the spectrum of phytopathogens that can be controlled.

However, besides the actual synergistic action with respect to fungicidal activity, the compositions according to the invention can also have further surprising advantageous properties. Examples of such advantageous properties that may be mentioned are: more advantageuos degradability; improved toxicological and/or ecotoxicological behaviour; or improved characteristics of the useful plants including: emergence, crop yields, more developed root system, tillering increase, increase in plant height, bigger leaf blade, less dead basal leaves, stronger tillers, greener leaf colour, less fertilizers needed, less seeds needed, more productive tillers, earlier flowering, early grain maturity, less plant verse (lodging), increased shoot growth, improved plant vigor, and early germination.

Some compositions according to the invention have a systemic action and can be used as foliar, soil and seed treatment fungicides.

With the compositions according to the invention it is possible to inhibit or destroy the phytopathogenic microorganisms which occur in plants or in parts of plants (fruit, blossoms, leaves, stems, tubers, roots) in different useful plants, while at the same time the parts of plants which grow later are also protected from attack by phytopathogenic microorganisms.

The compositions according to the invention can be applied to the phytopathogenic microorganisms, the useful plants, the locus thereof, the propagation material thereof, storage goods or technical materials threatened by microorganism attack.

The compositions according to the invention may be applied before or after infection of the useful plants, the propagation material thereof, storage goods or technical materials by the microorganisms.

The amount of a composition according to the invention to be applied, will depend on various factors, such as the compounds employed; the subject of the treatment, such as, for example plants, soil or seeds; the type of treatment, such as, for example spraying, dusting or seed dressing; the purpose of the treatment, such as, for example prophylactic

or therapeutic; the type of fungi to be controlled or the application time.

When applied to the useful plants component (A) is typically applied at a rate of 5 to 2000 g a.i./ha, particularly 10 to 1000 g a.i./ha, e.g. 50, 75, 100 or 200 g a.i./ha, typically in association with 1 to 5000 g a.i./ha, particularly 2 to 2000 g a.i./ha, e.g. 100, 250, 500, 800, 1000, 1500 g a.i./ha of component (B) and typically in association with 1 to 2000 g a.i./ha, particularly 1 to 5000 g a.i./ha, particularly 2 to 2000 g a.i./ha, e.g. 100, 250, 500, 800, 1000, 1500 g a.i./ha of component (C).

In agricultural practice the application rates of the compositions according to the invention depend on the type of effect desired, and typically range from 7 to 12000 g of total composition per hectare, more preferably from 20 to 4000 g of total composition per hectare, most preferably from 50 to 2000 g of total composition per hectare.

When the compositions according to the invention are used for treating seed, rates of 0.5 to 100 g of component (A) per 100 kg of seed, preferably from 2.5 to 40 g per 100 kg of seed, more preferably from 5 to 10 g per 100 kg of seed, and 0.01 to 200 g of component (B) per 100 kg of seed, preferably from 0.1 to 50 g per 100 kg of seed, more preferably from 1 to 20 g per 100 kg of seed, and 0.01 to 200 g of component (C) per 100 kg of seed, preferably from 0.1 to 50 g per 100 kg of seed, more preferably from 1 to 20 g per 100 kg of seed are generally sufficient.

The composition of the invention may be employed in any conventional form, for example in the form of a twin pack, a powder for dry seed treatment (DS), an emulsion for seed treatment (ES), a flowable concentrate for seed treatment (FS), a solution for seed treatment (LS), a water dispersible powder for seed treatment (WS), a capsule suspension for seed treatment (CF), a gel for seed treatment (GF), an emulsion concentrate (EC), a suspension concentrate (SC), a suspo-emulsion (SE), a capsule suspension (CS), a water dispersible granule (WG), an emulsifiable granule (EG), an emulsion, water in oil (EO), an emulsion, oil in water (EW), a micro-emulsion (ME), an oil dispersion (OD), an oil miscible flowable (OF), an oil miscible liquid (OL), a soluble concentrate (SL), an ultra-low volume suspension (SU), an ultra-low volume liquid (UL), a technical concentrate (TK), a dispersible concentrate (DC), a wettable powder (WP) or any technically feasible formulation in combination with agriculturally acceptable adjuvants.

Such compositions may be produced in conventional manner, e.g. by mixing the active ingredients with at least one appropriate inert formulation adjuvant (for example, diluents, solvents, fillers and optionally other formulating ingredients such as surfactants, biocides, anti-freeze, stickers, thickeners and compounds that provide adjuvancy effects). Also conventional slow release formulations may be employed where long lasting efficacy is intended. Particularly formulations to be applied in spraying forms, such as water dispersible concentrates (e.g. EC, SC, DC, OD, SE, EW, EO and the like), wettable powders and granules, may contain surfactants such as wetting and dispersing agents and other compounds that provide adjuvancy effects, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

The compositions according to the invention may also comprise further pesticides, such as, for example, fungicides, insecticides or herbicides.

A seed dressing formulation is applied in a manner known per se to the seeds employing the compositions according to the invention and a diluent in suitable seed dressing formulation form, e.g. as an aqueous suspension or in a dry powder form having good adherence to the seeds. Such seed dressing formulations are known in the art. Seed dressing formulations may contain the single active ingredients or the combination of active ingredients in encapsulated form, e.g. as slow release capsules or microcapsules.

In general, the formulations include from 0.01 to 90% by weight of active agent, from 0 to 20% agriculturally acceptable surfactant and 10 to 99.99% solid or liquid formulation inerts and adjuvant(s), the active agent consisting of at least component (A) together with component (B) together with component (C), and optionally other active agents, particularly microbiocides or conservatives or the like. Concentrated forms of compositions generally contain in between about 2 and 80%, preferably between about 5 and 70% by weight of active agent. Application forms of formulation may for example contain from 0.01 to 20% by weight, preferably from 0.01 to 5% by weight of active agent. Whereas commercial products will preferably be formulated as concentrates, the end user will normally employ diluted formulations.

The Examples which follow serve to illustrate the invention, "active ingredient" denoting a mixture of component (A), component (B) and component (C) in a specific mixing ratio.

<u>Formulation Examples</u>

| Wettable powders | a) | b) |
|---|---|---|
| active ingredient [A): B) :C) = 1:3:3(a), 1:1:1(b)] | 25% | 75 % |
| sodium lignosulfonate | 5% | - |
| sodium lauryl sulfate | 3% | 5 % |
| sodium diisobutylnaphthalenesulfonate | - | 10 % |
| (7-8 mol of ethylene oxide) | | |
| highly dispersed silicic acid | 5% | 10 % |

(continued)

| Wettable powders | a) | b) |
|---|---|---|
| kaolin | 62% | - |

The active ingredient is thoroughly mixed with the other formulation components and the mixture is thoroughly ground in a suitable mill, affording wettable powders that can be diluted with water to give suspensions of the desired concentration.

| Powders for dry seed treatment | a) | b) |
|---|---|---|
| active ingredient [A): B) :C) = 1:3:3(a), 1:1:1 (b)] | 25% | 75 % |
| light mineral oil | 5% | 5 % |
| highly dispersed silicic acid | 5% | - |
| kaolin | 65% | - |
| talc | - | 20 |

The active ingredient is thoroughly mixed with the other formulation components and the mixture is thoroughly ground in a suitable mill, affording powders that can be used directly for seed treatment.

Emulsifiable concentrate

| | |
|---|---|
| active ingredient (A): B) :C) = 1:6:6) | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| cyclohexanone | 30 % |
| xylene mixture | 50 % |

Emulsions of any required dilution, which can be used in plant protection, can be obtained from this concentrate by dilution with water.

| Dustable powders | a) | b) |
|---|---|---|
| active ingredient [A): B) :C) = 1:6:6(a), 1:10:10(b)] | 5% | 6 % |
| talcum | 95% | - |
| kaolin | - | 94% |

Ready-for-use dusts are obtained by mixing the active ingredient with the carriers and grinding the mixture in a suitable mill. Such powders can also be used for dry dressings for seed.

| Extruded granules | % w/w |
|---|---|
| active ingredient (A): B) :C) = 2:1:1) | 15 % |
| sodium lignosulfonate | 2 % |
| sodium alkyl naphthalene sulfonate | 1 % |
| kaolin | 82 % |

The active ingredient is mixed and ground with the other formulation components, and the mixture is moistened with water. The mixture is extruded and then dried in a stream of air.

Suspension concentrate

| | |
|---|---|
| active ingredient (A) : B) :C) = 1:8:8) | 40 % |
| propylene glycol | 10% |
| nonylphenol polyethylene glycol ether (15 mol of ethylene oxide) | 6 % |
| sodium lignosulfonate | 10% |
| carboxymethylcellulose | 1 % |
| silicone oil (in the form of a 75 % emulsion in water) | 1 % |
| water | 32 % |

The finely ground active ingredient is intimately mixed with the other formulation components, giving a suspension concentrate which can be diluted in water at any desired rate. Using such dilutions, living plants as well as plant propagation material can be treated and protected against infestation by microorganisms, by spraying, pouring or immersion.

Flowable concentrate for seed treatment

| | |
|---|---|
| active ingredient (A): B) :C) = 1:8:8) | 40 % |
| propylene glycol | 5 % |
| copolymer butanol PO/EO | 2 % |
| tristyrenephenole ethoxylate (with 10-20 moles EO) | 2 % |
| 1,2-benzisothiazolin-3-one | 0.5 % |
| monoazo-pigment calcium salt | 5 % |
| silicone oil (in the form of a 75 % emulsion in water) | 0.2 % |
| water | 45.3 % |

The finely ground active ingredient is intimately mixed with the other formulation components, giving a suspension concentrate which can be diluted further in water to be applied to seeds. Using such dilutions, propagation material can be treated and protected against infestation by microorganisms, by spraying, pouring or immersion.

Slow Release Capsule Suspension

28 parts of a combination of the compound of formula (I), a compound of component (B) and a compound of component (C), or of each of these compounds separately, are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed. The obtained capsule suspension is stabilized by adding 0.25 parts of a thickener and 3 parts of a dispersing agent. The capsule suspension formulation contains 28% of the active ingredients. The median capsule diameter is 8-15 microns. The resulting formulation is applied to seeds as an aqueous suspension in an apparatus suitable for that purpose.

Biological Examples

In comparison with a two-component mixture of active ingredients, such as, for example (B+C), the action to be expected (additive action) E for a given active ingredient combination of three components (A+B+C) can be calculated as follows (COLBY, S.R. "Calculating synergistic and antagonistic responses of herbicide combination". Weeds, Vol. 15, pages 20-22; 1967):
ppm = milligrams of active ingredient (= a.i.) per liter of spray mixture
$X_{BC}$ = % action by a mixture (B+C), for example, using p ppm of active ingredient.
Z = % action by active ingredient A) using r ppm of active ingredient.

$$E = X_{BC} + [Z (100-X) / 100]$$

Thus, if the observed action for the given combination of three active ingredients (A+B+C) is greater than the action to be expected from the Colby formula, then synergism is present.

If the action actually observed (O) is greater than the expected action (E), then the action of the combination is super-additive, i.e. there is a synergistic effect. In mathematical terms, synergism corresponds to a positive value for the difference of (O-E). In the case of purely complementary addition of activities (expected activity), said difference (O-E) is zero. A negative value of said difference (O-E) signals a loss of activity compared to the expected activity.

In the following examples a specific compound of formula I was used. Said compound of formula I) was a mixture of the racemic syn- and anti-compound of formula (I), in a syn/anti-ratio of 9:1.

Example B-1: Action against Botrytis cinerea

Conidia of the fungus from cryogenic storage are directly mixed into nutrient broth (PDB potato dextrose broth). After placing a (DMSO) solution of the test compounds into a microtiter plate (96-well format) the nutrient broth containing the fungal spores is added. The test plates are incubated at 24°C and the inhibition of growth is determined photometrically after 48-72hrs. The fungicide interactions in the combinations are calculated according to COLBY method.

| Dosage in mg active ingredient / liter final medium | | | |
|---|---|---|---|
| Cpd I in ppm | Chlorothalonil + Azoxystrobin in ppm | Expected control in (%$C_{exp}$) | Observed control in % (%$C_{obs}$) |
| [mg/L] | [mg/L] | expected | observed |
| 0.22 | - | - | 74 |
| - | 0.22+0.22 | - | 0 |
| 0.22 | 0.22+0.22 | 74 | 85 |

| Dosage in mg active ingredient / liter final medium | | | |
|---|---|---|---|
| Cpd I in ppm | Azoxystrobin + Fenpropidin in ppm | Expected control in % (%$C_{exp}$) | Observed control in % (%$C_{obs}$) |
| [mg/L] | [mg/L] | expected | observed |
| 0.02 | - | - | 17 |
| 0.07 | - | - | 61 |
| 0.22 | - | - | 74 |
| 0.67 | - | - | 79 |
| - | 0.02+0.02 | - | 0 |
| - | 0.07+0.07 | - | 0 |
| - | 0.22+0.22 | - | 0 |
| - | 0.67+0.67 | - | 32 |
| 0.02 | 0.02+0.02 | 17 | 23 |
| 0.07 | 0.07+0.07 | 62 | 68 |
| 0.22 | 0.22+0.22 | 74 | 84 |
| 0.67 | 0.67+0.67 | 86 | 94 |

Example B-2: Action against Pyricularia oryzae

Conidia of the fungus from cryogenic storage are directly mixed into nutrient broth (PDB potato dextrose broth). After placing a (DMSO) solution of the test compounds into a microtiter plate (96-well format) the nutrient broth containing the fungal spores is added. The test plates are incubated at 24°C and the inhibition of growth is determined photometrically after 72 hrs. The fungicide interactions in the combinations are calculated according to COLBY method.

| Dosage in mg active ingredient / liter final medium | | | |
|---|---|---|---|
| Cpd I in ppm | Chlorothalonil + Azoxystrobin in ppm | Expected control in % (%$C_{exp}$) | Observed control in % (%$C_{obs}$) |
| [mg/L] | [mg/L] | expected | observed |
| 0.02 | - | - | 35 |
| - | 0.02+0.02 | - | 78 |
| 0.02 | 0.02+0.02 | 86 | 94 |

| Dosage in mg active ingredient / liter final medium | | | |
|---|---|---|---|
| Cpd I in ppm | Difenoconazole + Azoxystrobin in ppm | Expected control in % (%$C_{exp}$) | Observed control in % (%$C_{obs}$) |
| [mg/L] | [mg/L] | expected | observed |
| 0.02 | - | - | 35 |
| | 0.02+0.02 | | 79 |
| 0.02 | 0.02+0.02 | 86 | 92 |

| Dosage in mg active ingredient / liter final medium | | | |
|---|---|---|---|
| Cpd I in ppm | Difenoconazole+ Fenpropidin in ppm | Expected control in % (%$C_{exp}$) | Observed control in % (%$C_{obs}$) |
| [mg/L] | [mg/L] | expected | observed |
| 0.02 | - | - | 35 |
| - | 0.02+0.02 | - | 0 |
| 0.02 | 0.02+0.02 | 35 | 41 |

| Dosage in mg active ingredient / liter final medium | | | |
|---|---|---|---|
| Cpd I in ppm in ppm | Azoxystrobin + Fenpropidin | Expected control in % (%$C_{exp}$) | Observed control in % (%$C_{obs}$) |
| [mg/L] | [mg/L] | expected | observed |
| 0.01 | - | - | 11 |
| - | 0.01+0.01 | - | 16 |
| 0.01 | 0.01+0.01 | 26 | 33 |

Example B-3: Action against Alternaria solani (early blight)

Conidia -harvested from a freshly grown colony- of the fungus are directly mixed into nutrient broth (PDB potato dextrose broth). After placing a (DMSO) solution of the test compounds into a microtiter plate (96-well format) the nutrient broth containing the fungal spores is added. The test plates are incubated at 24°C and the inhibition of growth is determined photometrically after 48 hrs. The fungicide interactions in the combinations are calculated according to COLBY method.

| Dosage in mg active ingredient / liter final medium | | | |
|---|---|---|---|
| Cpd I in ppm | Chlorothalonil + Azoxystrobin in ppm | Expected control in % (%$C_{exp}$) | Observed control in % (%$C_{obs}$) |
| [mg/L] | [mg/L] | expected | observed |
| 0.02 | - | - | 46 |
| - | 0.02+0.02 | - | 28 |
| 0.02 | 0.02+0.02 | 61 | 67 |

| Dosage in mg active ingredient / liter final medium | | | |
|---|---|---|---|
| Cpd I in Cpd C-1 ppm | + Prothioconazole in ppm | Expected control in % (%$C_{exp}$) | Observed control in % (%$C_{obs}$) |
| [mg/L] | [mg/L] | expected | observed |
| 0.004 | - | - | 1 |
| 0.008 | - | - | 5 |
| - | 0.004+0.004 | - | 0 |
| - | 0.008+0.008 | - | 1 |
| 0.004 | 0.004+0.004 | 1 | 15 |
| 0.008 | 0.008+0.008 | 5 | 10 |

| Dosage in mg active ingredient /liter final medium | | | |
|---|---|---|---|
| Cpd I in ppm | Cpd + C-1 Azoxystrobin in ppm | Expected control in % (%$C_{exp}$) | Observed control in % (%$C_{obs}$) |
| [mg/L] | [mg/L] | expected | observed |
| 0.016 | - | - | 9 |
| 0.031 | - | - | 29 |
| - | 0.016+0.016 | - | 14 |
| - | 0.031+0.031 | - | 33 |
| 0.016 | 0.016+0.016 | 22 | 23 |
| 0.031 | 0.031+0.031 | 53 | 65 |

| Dosage in mg active ingredient / liter final medium | | | |
|---|---|---|---|
| Cpd I in ppm | Prothioconazole + Cyprodinil in ppm | Expected control in % (%$C_{exp}$) | Observed control in % (%$C_{obs}$) |
| [mg/L] | [mg/L] | expected | observed |
| 0.004 | - | - | 2 |
| 0.008 | - | - | 2 |
| 0.016 | - | - | 12 |
| - | 0.004+0.004 | - | 0 |
| - | 0.008+0.008 | - | 0 |
| - | 0.016+0.016 | - | 0 |

(continued)

| Dosage in mg active ingredient / liter final medium | | | |
|---|---|---|---|
| Cpd I in ppm | Prothioconazole + Cyprodinil in ppm | Expected control in % (%$C_{exp}$) | Observed control in % (%$C_{obs}$) |
| 0.004 | 0.004+0.004 | 2 | 7 |
| 0.008 | 0.008+0.008 | 2 | 13 |
| 0.016 | 0.016+0.016 | 12 | 19 |

| Dosage in mg active ingredient / liter final medium | | | |
|---|---|---|---|
| Cpd I in ppm | Cyprodinil + Cpd 4-1.1 in ppm | Expected control in % (%$C_{exp}$) | Observed control in % (%$C_{obs}$) |
| [mg/L] | [mg/L] | expected | observed |
| 0.008 | - | - | 2 |
| 0.016 | - | - | 3 |
| 0.031 | - | - | 9 |
| - | 0.008+0.008 | - | 0 |
| - | 0.016+0.016 | - | 0 |
| - | 0.031 +0.031 | - | 5 |
| 0.008 | 0.008+0.008 | 2 | 10 |
| 0.016 | 0.016+0.016 | 3 | 17 |
| 0.031 | 0.031+0.031 | 13 | 33 |

Example B-4: Action against Pyrenophora teres (Net blotch)

Conidia of the fungus from cryogenic storage are directly mixed into nutrient broth (PDB potato dextrose broth). After placing a (DMSO) solution of the test compounds into a microtiter plate (96-well format) the nutrient broth containing the fungal spores is added. The test plates are incubated at 24°C and the inhibition of growth is determined photometrically after 48 hrs. The fungicide interactions in the combinations are calculated according to COLBY method.

| Dosage in mg active ingredient / liter final medium | | | |
|---|---|---|---|
| Cpd I in ppm | Chlorothalonil + Prothioconazole in ppm | Expected control % in % (%$C_{exp}$) | Observed control in % (%$C_{obs}$) |
| [mg/L] | [mg/L] | expected | observed |
| 0.5 | - | - | 70 |
| 1 | - | - | 79 |
| - | 0.5+0.5 | - | 32 |
| - | 1+1 | - | 40 |
| 0.5 | 0.5+0.5 | 80 | 87 |
| 1 | 1+1 | 87 | 92 |

Example B-5: Action against Pythium ultimum (Damping off)

Mycelial fragments of the fungus, prepared from a fresh liquid culture, are directly mixed into nutrient broth (PDB potato dextrose broth). After placing a (DMSO) solution of the test compounds into a microtiter plate (96-well format) the nutrient broth containing the fungal spores is added. The test plates are incubated at 24°C and the inhibition

of growth is determined photometrically after 48 hrs. The fungicide interactions in the combinations are calculated according to COLBY method.

| Dosage in mg active ingredient / liter final medium | | | |
|---|---|---|---|
| Cpd I in ppm | Cyproconazole + Difenoconazole in ppm | Expected % control in (%$C_{exp}$) | Observed control in % (%$C_{obs}$) |
| [mg/L] | [mg/L] | expected | observed |
| 0.67 | - | - | 0 |
| - | 0.67+0.67 | - | 0 |
| 0.67 | 0.67+0.67 | 0 | 12 |

## Claims

1. A composition suitable for control of diseases caused by phytopathogens comprising, in an amount producing a synergistic effect,

(A) a compound of formula I

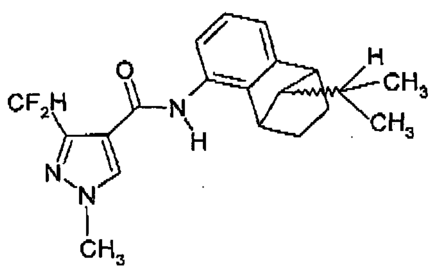

(I),

or a tautomer of such a compound;
(B) a compound selected from the group consisting of chlorothalonil, glyphosate, a compound of formula C-1

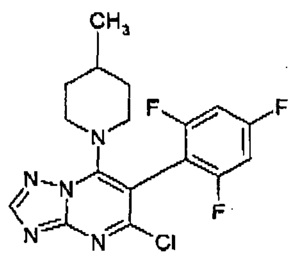

(C-1),

epoxiconazole, prothioconazole, cyproconazole, penconazole, propiconazole, tebuconazole, metconazole, ipconazole, difenoconazole, cyprodinil, azoxystrobin and a pyridylethylbenzamide derivative of formula C-4

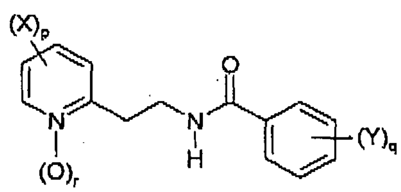

(C-4),

wherein

p is an integer equal to 1, 2, 3 or 4;
q is an integer equal to 1, 2, 3, 4 or 5;
r is an integer equal to 0 or 1;
each substituent X is chosen, independently of the others, as being halogen, alkyl, haloalkoxy or haloalkyl;

each substituent Y is chosen, independently of the others, as being halogen, alkyl, alkenyl, alkynyl, haloalkyl, alkoxy, amino, phenoxy, alkylthio, dialkylamino, acyl, cyano, ester, hydroxy, aminoalkyl, benzyl, haloalkoxy, halosulphonyl, halothioalkyl, alkoxyalkenyl, alkylsulphonamide, nitro, alkylsulphonyl, phenylsulphonyl or benzylsulphonyl; and
(C) a compound selected from the group consisting of a triazolopyrimidine fungicide, an azole fungicide, an anilino-pyrimidine fungicide, a strobilurin fungicide, a morpholine fungicide, a benzamide fungicide, glyphosate, trinexapac-ethyl and acibenzolar-S-methyl; wherein (B) and (C) are different compounds.

2. A composition according to claim 1, wherein component (B) is a compound selected from the group consisting of chlorothalonil, glyphosate, a compound of formula C-1, epoxiconazole, prothioconazole, cyproconazole, propiconazole, tebuconazole, metconazole, ipconazole, difenoconazole, cyprodinil, azoxystrobin and a pyridylethylbenzamide derivative of formula C-4, and wherein component (C) is a compound selected from the group consisting of a triazolopyrimidine fungicide, an azole fungicide, an anilino-pyrimidine fungicide, a strobilurin fungicide, a morpholine fungicide, a benzamide fungicide and glyphosate.

3. A composition according to claim 1, wherein component (B) is chlorothalonil.

4. A composition according to claim 1, wherein component (B) is a compound selected from the group consisting of epoxiconazole, prothioconazole, cyproconazole, propiconazole, tebuconazole, metconazole, ipconazole and difenoconazole.

5. A composition according to claim 1, wherein component (B) is epoxiconazole.

6. A composition according to claim 1, wherein component (B) is cyproconazole.

7. A composition according to claim 1, wherein component (B) is propiconazole.

8. A composition according to claim 1, wherein component (B) is ipconazole.

9. A composition according to claim 1, wherein component (B) is difenoconazole.

10. A composition according to claim 3, wherein component (C) is an azole fungicide.

11. A composition according to claim 3, wherein component (C) is azoxystrobin.

12. A composition according to claim 1, wherein the weight ratio of (A) to (B), the weight ratio of (A) to (C) and the weight ratio of (B) to (C) is from 1000 : 1 to 1: 1000.

13. A method of controlling diseases on useful plants or on propagation material thereof caused by phytopathogens, which comprises applying to the useful plants, the locus thereof or propagation material thereof a composition according to claim 1.

**Patentansprüche**

1. Zusammensetzung, die sich für die Bekämpfung von durch Phytopathogene verursachte Krankheiten eignet, und die folgendes in einer Menge umfaßt, welche zu einer synergistischen Wirkung führt:

(A) eine Verbindung der Formel I

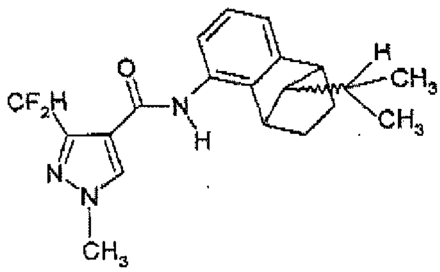
(I),

oder ein Tautomer solch einer Verbindung;
(B) eine Verbindung ausgewählt aus der Gruppe bestehend aus Chlorthalonil, Glyphosate, einer Verbindung der Formel C-1

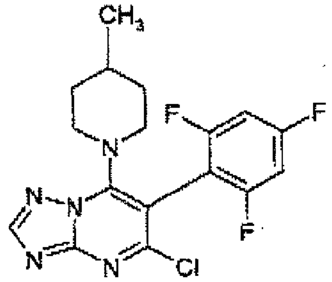
(C-1),

Epoxiconazol, Prothioconazol, Cyproconazol, Penconazol, Propiconazol, Tebuconazol, Metconazol, Ipconazol, Difenoconazol, Cyprodinil, Azoxystrobin und ein
Pyridylethylbenzamidderivat der Formel C-4

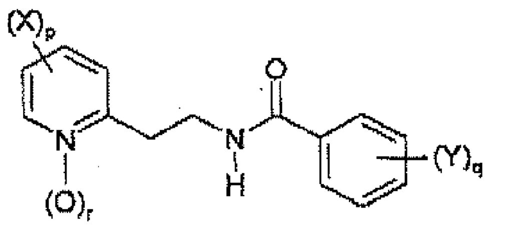
(C-4),

worin
p eine ganze Zahl gleich 1, 2, 3 oder 4 bedeutet;
q eine ganze Zahl gleich 1, 2, 3, 4 oder 5 bedeutet;
r eine ganze Zahl gleich 0 oder 1 bedeutet;
jeder Substituent X unabhängig von den anderen aus der Reihe Halogen, Alkyl, Halogenalkoxy oder Halogenalkyl stammt;
jeder Substituent Y unabhängig von den anderen aus der Reihe Halogen, Alkyl, Alkenyl, Alkinyl, Halogenalkyl, Alkoxy, Amino, Phenoxy, Alkylthio, Dialkylamino, Acyl, Cyano, Ester, Hydroxy, Aminoalkyl, Benzyl, Halogenalkoxy, Halogensulfonyl, Halogenthioalkyl, Alkoxyalkenyl, Alkylsulfonamid, Nitro, Alkylsulfonyl, Phenylsulfonyl oder Benzylsulfonyl stammt; und
(C) eine Verbindung ausgewählt aus der Gruppe bestehend aus einem Triazolpyrimidinfungizid, einem Azolfungizid, einem Anilinopyrimidinfungizid, einem Strobilurinfungizid, einem Morpholinfungizid, einem Benzamidfungizid, Glyphosate, Trinexapac-Ethyl und Acibenzolar-S-methyl; wobei es sich bei (B) und (C) um unterschiedliche Verbindungen handelt.

2. Zusammensetzung nach Anspruch 1, wobei es sich bei Komponente (B) um eine Verbindung ausgewählt aus der Gruppe bestehend aus Chlorthalonil, Glyphosate, einer Verbindung der Formel C-1, Epoxiconazol, Prothioconazol,

Cyproconazol, Propiconazol, Tebuconazol, Metconazol, Ipconazol, Difenoconazol, Cyprodinil, Azoxystrobin und einem Pyridylethylbenzamidderivat der Formel C-4 handelt und wobei es sich bei Komponente (C) um eine Verbindung ausgewählt aus der Gruppe bestehend aus einem Triazolpyrimidinfungizid, einem Azolfungizid, einem Anilinopyrimidinfungizid, einem Strobilurinfungizid, einem Morpholinfungizid, einem Benzamidfungizid und Glyphosate handelt.

**3.** Zusammensetzung nach Anspruch 1, wobei es sich bei Komponente (B) um Chlorthalonil handelt.

**4.** Zusammensetzung nach Anspruch 1, wobei es sich bei Komponente (B) um eine Verbindung ausgewählt aus der Gruppe bestehend aus **Epoxiconazol, Prothioconazol, Cyproconazol, Propiconazol,** Tebuconazol, **Metconazol, Ipconazol und** Difenoconazol handelt.

**5.** Zusammensetzung nach Anspruch 1, wobei es sich bei Komponente (B) um Epoxiconazol handelt.

**6.** Zusammensetzung nach Anspruch 1, wobei es sich bei Komponente (B) um Cyproconazol handelt.

**7.** Zusammensetzung nach Anspruch 1, wobei es sich bei Komponente (B) um Propiconazol handelt.

**8.** Zusammensetzung nach Anspruch 1, wobei es sich bei Komponente (B) um Ipconazol handelt.

**9.** Zusammensetzung nach Anspruch 1, wobei es sich bei Komponente (B) um Difenoconazol handelt.

**10.** Zusammensetzung nach Anspruch 3, wobei es sich bei Komponente (C) um ein Azolfungizid handelt.

**11.** Zusammensetzung nach Anspruch 3, wobei es sich bei Komponente (C) um Azoxystrobin handelt.

**12.** Zusammensetzung nach Anspruch 1, wobei das Gewichtsverhältnis von (A) zu (B), das Gewichtsverhältnis von (A) zu (C) und das Gewichtsverhältnis von (B) zu (C) 1000:1 bis 1:1000 beträgt.

**13.** Verfahren zur Bekämpfung von durch Phytopathogene verursachten Krankheiten an Nutzpflanzen oder ihrem Vermehrungsmaterial, bei dem man auf die **Nutzpflanzen**, **ihren Ort oder ihr** Vermehrungsmaterial eine Zusammensetzung nach Anspruch 1 ausbringt.

## Revendications

**1.** Composition convenable pour le contrôle de maladies provoquées par des phytopathogènes comprenant, en une quantité produisant un effet synergique,

(A) un composé de formule I

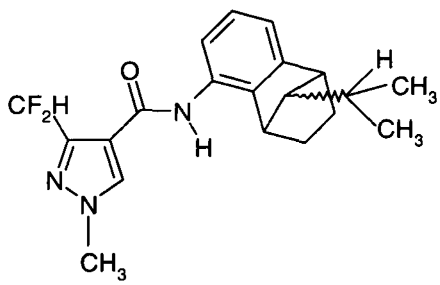

(I),

ou un tautomère d'un tel composé ;

(B) un composé choisi parmi le groupe constitué par le chlorothalonil, le glyphosate, un composé de formule C-1

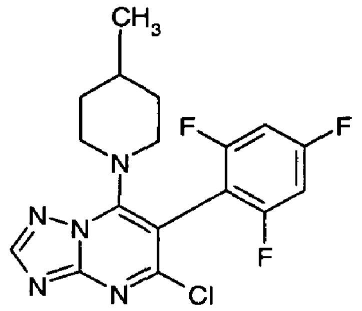

(C-1),

l'époxiconazole, le prothioconazole, le cyproconazole, le penconazole, le propiconazole, le tébuconazole, le metconazole, l' ipconazole, le difénoconazole, le cyprodinil, l'azoxystrobine et un dérivé de pyridyléthylbenzamide de formule C-4

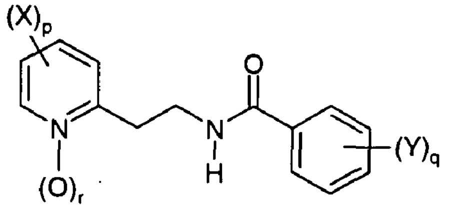

(C-4),

dans laquelle
p est un nombre entier égal à 1, 2, 3 ou 4 ;
q est un nombre entier égal à 1, 2, 3, 4 ou 5;
r est un nombre entier égal à 0 ou 1 ;
chaque substituant X est choisi, indépendamment les uns des autres, parmi halogène, alkyle, halogénoalcoxy ou halogénoalkyle ;
chaque substituant Y est choisi, indépendamment les uns des autres, parmi halogène, alkyle, alcényle, alcynyle, halogénoalkyle, alcoxy, amino, phénoxy, alkylthio, dialkylamino, acyle, cyano, ester, hydroxy, aminoalkyle, benzyle, halogénoalcoxy, halogéno-sulfonyle, halogénothioalkyle, alcoxyalcényle, alkyl-sulfonamide, nitro, alkylsulfonyle, phénylsulfonyle ou benzylsulfonyle ; et
(C) un composé choisi parmi le groupe constitué par un fongicide à la triazolopyrimidine, un fongicide à l'azole, un fongicide à l'anilinopyrimidine, un fongicide à la strobilurine, un fongicide à la morpholine, un fongicide au benzamide, le glyphosate, le trinéxapac-éthyle et l'acibenzolar-S-méthyle ;

où (B) et (C) sont des composés différents.

2. Composition selon la revendication 1, dans laquelle le composant (B) est un composant choisi parmi le groupe constitué par le chlorothalonil, le glyphosate, un composé de formule C-1, l'époxiconazole, le prothioconazole, le cyproconazole, le propiconazole, le tébuconazole, le metconazole, l'ipconazole, le difénoconazole, le cyprodinil, l'azoxystrobine et un dérivé de pyridyléthylbenzamide de formule C-4, et dans laquelle le composant (C) est un composant choisi parmi le groupe constitué par un fongicide à la triazolopyrimidine, un fongicide à l'azole, un fongicide à l'anilinopyrimidine, un fongicide à la strobilurine, un fongicide à la morpholine, un fongicide au benzamide et le glyphosate.

3. Composition selon la revendication 1, dans laquelle le composant (B) est le chlorothalonil.

4. Composition selon la revendication 1, dans laquelle le composant (B) est un composé choisi parmi le groupe constitué par l'époxiconazole, le prothioconazole, le cyproconazole, le propiconazole, le tébuconazole, le metconazole, l'ipconazole et le difénoconazole.

5. Composition selon la revendication 1, dans laquelle le composant (B) est l'époxiconazole.

6. Composition selon la revendication 1, dans laquelle le composant (B) est le cyproconazole.

7. Composition selon la revendication 1, dans laquelle le composant (B) est le propiconazole.

8. Composition selon la revendication 1, dans laquelle le composant (B) est l'ipconazole.

9. Composition selon la revendication 1, dans laquelle le composant (B) est le difénoconazole.

10. Composition selon la revendication 3, dans laquelle le composant (C) est un fongicide à l'azole.

11. Composition selon la revendication 3, dans laquelle le composant (C) est l'azoxystrobine.

12. Composition selon la revendication 1, dans laquelle le rapport pondéral de (A) à (B), le rapport pondéral de (A) à (C) et le rapport pondéral de (B) à (C) vont de 1000:1 à 1:1000.

13. Méthode de contrôle de maladies sur des plantes utiles ou sur du matériau de propagation de celles-ci, provoquées par des phytopathogènes, comprenant l'application aux plantes utiles, au lieu de celles-ci ou à un matériau de propagation de celles-ci, d'une composition selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0435589 A
- US 5093347 A
- EP 0936213 A
- EP 0860438 A
- WO 9846607 A
- WO 0416088 A
- WO 0577179 A
- EP 0392225 A
- WO 9533818 A
- EP 0353191 A


### Non-patent literature cited in the description


- **M. Neuenschwander et al.** *Helv. Chim.Acta,* 1971, vol. 54, 1037
- *HELV. CHIM. ACTA,* 1965, vol. 48, 955
- **R.D. Little et al.** *J. Org. Chem.,* 1984, vol. 49, 1849
- **I. Erden et al.** *J. Org. Chem.,* 1995, vol. 60, 813
- **S. Collins et al.** *J. Org. Chem.,* 1990, vol. 55, 3395
- The Pesticide Manual - A World Compendium. The British Crop Protection Council
- **COLBY, S.R.** Calculating synergistic and antagonistic responses of herbicide combination. *Weeds,* 1967, vol. 15, 20-22